# FASCICULE DE BREVET EUROPEEN

(11) **EP 1 092 590 B1**
(45) Date de publication et mention de la délivrance du brevet: **02.06.2004**
(21) Numéro de dépôt: 00402837.9
(22) Date de dépôt: 13.10.2000
(51) Int. Cl.: B60R 7/00, B60R 7/04

(54) **Coffret pour pavillon de véhicule automobile, et véhicule automobile équipé d'un tel coffret**
Behälter für Kraftfahrzeugdachhimmel, und Kraftfahrzeug mit solchem Behälter
Box for vehicle headliner, and vehicle equipped with such box

(30) Priorité: 13.10.1999 FR 9912769
(43) Date de publication de la demande: 18.04.2001
(73) Titulaire: Renault s.a.s., 92100 Boulogne Billancourt (FR)
(72) Inventeur: Prats, Christian, 75018 Paris (FR)

(56) Documents cités:
- DE-A- 4 425 533
- US-A- 1 950 118
- US-A- 3 773 378
- US-A- 4 540 071

## Description

La présente invention est relative à un coffret pour pavillon de véhicule automobile, et à un véhicule automobile équipé d'un tel coffret.

On connaît des brevets US 1 726 257 et US 1 927 735 des coffrets pour pavillon de véhicule automobile, destinés à transporter des articles tels que des vêtements.

On connaît également le brevet US 4 540 071 qui décrit un rangement modulable selon le préambule de la revendication 1, dans lequel il est possible de remplacer les extrémités afin d'augmenter ou de diminuer ces capacités.

De tels coffrets sont destinés à être fixés sous les pavillons de véhicules automobiles, et notamment de véhicules utilitaires.

Grâce à ces coffrets, on peut placer des articles relativement légers et peu encombrants dans la partie supérieure du volume de transport disponible dans de tels véhicules, et libérer ainsi la partie inférieure de ce volume de transport.

Toutefois, il se trouve des situations où seule une partie du volume de rangement de tels coffrets est utilisée, ces derniers devenant alors inutilement encombrants.

La présente invention a pour but de fournir un coffret pour pavillon permettant de remédier à cet inconvénient.

On atteint ce but de l'invention avec un coffret pour pavillon de véhicule automobile selon la revendication 1, remarquable en ce qu'il comprend des moyens pour moduler son volume de rangement.

Grâce à ces caractéristiques, on peut ajuster le volume de rangement du coffret à celui qu'occupent les articles qu'il contient, et éviter ainsi toute consommation inutile d'espace dans le volume de transport du véhicule automobile.

Suivant d'autres caractéristiques de l'invention:
- lesdites parties comprennent d'une part un caisson avant sensiblement parallélépipédique destiné à être fixé de manière solidaire audit pavillon, et d'autre part un caisson arrière sensiblement homothétique dudit caisson avant, monté coulissant à l'intérieur de celui-ci,
- ledit coffret comprend au moins un rail de suspension destiné à être fixé audit pavillon, ce rail comportant une portion avant solidaire dudit caisson avant, et une portion arrière s'étendant au delà de ce caisson, et ledit caisson arrière est monté coulissant sur ladite portion arrière dudit rail,
- ledit caisson comprend deux rails de suspension,
- l'un au moins desdits caissons comprend une porte transversale comportant au moins deux battants de tailles différentes,
- ledit caisson arrière comprend une porte comportant deux battants s'étendant respectivement et sensiblement sur 1/3 et 2/3 de la largeur dudit caisson arrière,
- lesdites parties comprennent d'une part un caisson et d'autre part un panneau monté coulissant sur la partie arrière inférieure dudit caisson,
- ledit panneau comprend une porte transversale susceptible de s'ouvrir vers le bas et s'étendant sur la quasi-totalité de la largeur dudit caisson,
- ledit caisson est ouvert dans sa partie supérieure,
- ledit coffret est conformé pour épouser la forme dudit pavillon.

La présente invention porte également sur un véhicule automobile, remarquable en ce qu'il est équipé d'un coffret pour pavillon conforme à ce qui précède.

D'autres caractéristiques et avantages de la présente invention apparaîtront à la lecture de la description qui va suivre et à l'examen du dessin annexé, dans lequel:
- la figure 1 est une vue en perspective d'un mode de réalisation du coffret pour pavillon de véhicule automobile selon l'invention,
- la figure 2 est une vue en perspective de l'arrière d'un véhicule utilitaire équipé du coffret de la figure 1, et
- la figure 3 est une vue en perspective d'un autre mode de réalisation du coffret selon l'invention.

Sur ces figures, des références numériques identiques désignent des organes ou ensembles d'organes identiques ou analogues.

Dans ce qui suit, on utilisera les termes « avant », « arrière », « supérieur », « inférieur ». Ces termes doivent s'entendre par rapport à la position que le coffret selon l'invention est destiné à occuper à l'intérieur de l'habitacle d'un véhicule automobile.

Pour mémoire, sur les figures du dessin annexé, l'« avant » est situé en direction des points de fuite des perspectives, et les parties dites « supérieures » sont situées vers le haut de la feuille.

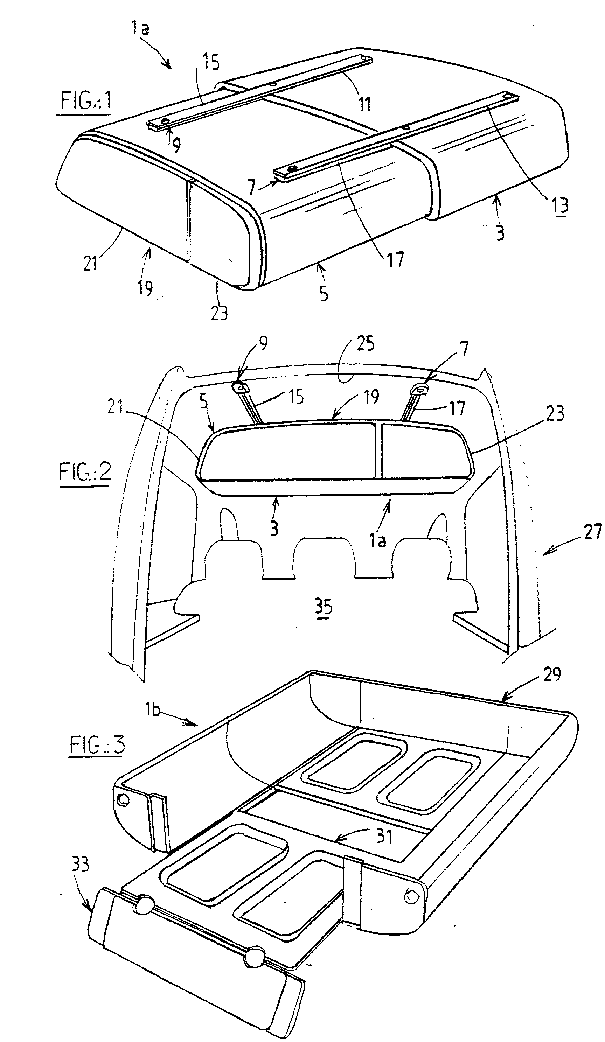

On se reporte à présent à la figure 1, sur laquelle on voit que, selon un mode de réalisation possible, le coffret la selon l'invention comprend d'une part un caisson avant 3 sensiblement parallélépipédique, et d'autre part un caisson arrière 5 sensiblement homothétique du caisson avant 3, monté coulissant à l'intérieur de celui-ci.

Sur cette figure, le coffret la est représenté en position complètement déployée, c'est-à-dire que le caisson arrière 5 est sorti au maximum du caisson avant 3.

La forme extérieure de ces caissons est de préférence conçue pour épouser l'arrondi d'un pavillon de véhicule automobile.

Au moins un rail de suspension, et de préférence deux rails de suspension 7, 9 comportent chacun une portion avant 11, 13 solidaire du caisson avant 3, et une portion arrière 15, 17 s'étendant au-delà de ce caisson.

Des moyens non représentés mais à la portée de l'homme du métier sont interposés entre le caisson arrière 5 et les portions arrière 15, 17 des rails de suspension 7, 9 afin de suspendre ce caisson de manière coulissante sur ces rails, ainsi qu'afin de bloquer sélectivement ce caisson sur ces rails dans différentes positions.

Le caisson arrière 5 comprend une porte transversale 19 comportant de préférence deux battants 21, 23 s'ouvrant vers le bas et s'étendant respectivement et sensiblement sur 2/3 et sur 1/3 de la largeur de ce caisson.

Des moyens non représentés tels que des verrous permettent de bloquer les battants 21, 23 en position fermée.

Selon une variante possible, le caisson avant 3 peut être équipé, dans sa partie avant, d'une porte analogue à celle du caisson arrière 5.

On se reporte à présent à la figure 2, sur laquelle on voit la manière dont le coffret selon l'invention est destiné à être fixé sous le pavillon 25 d'un véhicule automobile 27.

Le véhicule représenté sur cette figure est du type utilitaire, le coffret selon l'invention étant particulièrement adapté à ce genre de véhicule.

On a représenté le volume de transport de ce véhicule lorsqu'il est vu de l'arrière et que les portières arrière (ou le hayon) de ce véhicule sont en position ouverte.

Comme cela apparaît sur cette figure, les rails de suspension 7, 9 sont destinés à être fixés sous le pavillon 25, selon la direction longitudinale du véhicule.

Le coffret 1a est représenté sur cette figure en position complètement escamotée, c'est-à-dire que le caisson arrière 5 est emboîté au maximum dans le caisson avant 3, ce qui rend visibles les portions arrière 15, 17 des rails de suspension 7, 9.

On se reporte à présent à la figure 3, sur laquelle on a représenté un autre mode de réalisation du coffret 1b selon l'invention.

Comme on peut le voir sur cette figure, ce coffret comprend d'une part un caisson 29 ouvert dans sa partie supérieure, et d'autre part un panneau 31 monté coulissant sur la partie arrière inférieure de ce caisson.

Le panneau 31 comprend une porte transversale 33 susceptible de s'ouvrir vers le bas et s'étendant sur la quasi-totalité de la largeur du caisson 29.

Le mode d'utilisation et les avantages du coffret selon l'invention résultent directement de la description qui précède.

On se reporte à la figure 2, sur laquelle on voit que le fait de fixer le coffret la selon l'invention sous le pavillon 25 du véhicule utilitaire 27 permet de libérer la partie inférieure 35 du volume de transport disponible dans ce véhicule.

Pour placer des articles dans le coffret la depuis l'arrière du véhicule 27, on ouvre l'un des battants 21 ou 23 ou, si cela est nécessaire, ces deux battants à la fois.

Si l'on souhaite minimiser l'encombrement du coffret la, on fait coulisser le caisson arrière 5 le long des rails de suspension 7, 9 jusqu'à ce que le volume de rangement du coffret la corresponde sensiblement au volume occupé par les articles qu'il contient, puis on le bloque dans cette position à l'aide des moyens susmentionnés (non représentés).

Lorsque certains articles ont une longueur qui dépasse la longueur du coffret la, on peut laisser la porte 19 ou l'un des battants 21, 23 en position ouverte, selon la largeur de tels articles.

On peut de la sorte d'une part placer dans le coffret la des articles qui dépassent la longueur maximale de celui-ci, et d'autre part limiter son déploiement lorsqu'il contient des articles longiformes.

On comprend qu'en modulant ainsi le volume de rangement du coffret 1a, on peut tirer le meilleur parti du volume de transport du véhicule utilitaire 27.

Le fait que la forme extérieure de ce coffret épouse celle du pavillon 25 contribue également à une utilisation optimale de ce volume de transport.

Dans le cas du coffret 1b, la modulation du volume de rangement s'effectue en faisant coulisser le panneau 31 par rapport au caisson 29.

Lorsque ce panneau se trouve en position déployée comme cela est représenté sur la figure 3, la porte 33 se trouve nécessairement en position ouverte, et le coffret 1b peut alors recevoir des objets dont la longueur dépasse largement celle du caisson 29.

Comme on peut le comprendre à présent, le coffret selon l'invention, de par son caractère modulaire et sa forme ergonomique, permet d'optimiser l'utilisation du volume de transport disponible à l'intérieur d'un véhicule tel qu'un véhicule utilitaire en fonction des articles à transporter.

Bien entendu, la présente invention n'est pas limitée aux modes de réalisation décrits et représentés, fournis à titre d'exemple illustratif et non limitatif.

## Revendications

1. Coffret (1a, 1b) pour pavillon (25) de véhicule automobile (27) qui comporte au moins deux parties (3, 5, 29, 31) formant un volume de rangement modulable, **caractérisé en ce que** les parties (3, 5, 29, 31) sont susceptibles de coulisser longitudinalement les unes par rapport aux autres de manière à augmenter ou à réduire ledit volume de rangement.

2. Coffret (1a, 1b) selon la revendication 1, **caractérisé en ce que** lesdites parties comprennent d'une part un caisson avant (3) sensiblement parallélépipédique destiné à être fixé de manière solidaire audit pavillon (25), et d'autre part un caisson arrière (5) sensiblement homothétique dudit caisson avant (3), monté coulissant à l'intérieur de celui-ci.

3. Coffret (1a, 1b) selon la revendication 2, **caractérisé en ce qu'**il comprend au moins un rail de suspension (7, 9) destiné à être fixé audit pavillon (25), ce rail comportant une portion avant (11, 13) solidaire dudit caisson avant (3), et une portion arrière (15, 17) s'étendant au delà de ce caisson, et **en ce que** ledit caisson arrière (5) est monté coulissant sur ladite portion arrière (15, 17) dudit rail (7, 9).

4. Coffret (1a, 1b) selon la revendication 3, **caractérisé en ce qu'**ils comprend deux rails de suspension (7, 9).

5. Coffret (1a, 1b) selon l'une quelconque des revendications 2 à 4, **caractérisé en ce que** l'un au moins desdits caissons (3, 5) comprend une porte transversale (19) comportant au moins deux battants (21, 23) de tailles différentes.

6. Coffret (1a, 1b) selon la revendication 5, **caractérisé en ce que** ledit caisson arrière (5) comprend une porte (19) comportant deux battants (21, 23) s'étendant respectivement et sensiblement sur 1/3 et 2/3 de la largeur dudit caisson arrière (5).

7. Coffret (1a, 1b) selon la revendication 1, **caractérisé en ce que** lesdites parties comprennent d'une part un caisson (29) et d'autre part un panneau (31) monté coulissant sur la partie arrière inférieure dudit caisson (29).

8. Coffret (1a, 1b) selon la revendication 7, **caractérisé en ce que** ledit panneau (31) comprend une porte transversale (33) susceptible de s'ouvrir vers le bas et s'étendant sur la quasi-totalité de la largeur dudit caisson (29).

9. Coffret (1a, 1b) selon l'une des revendications 7 ou 8, **caractérisé en ce que** ledit caisson (29) est ouvert dans sa partie supérieure.

10. Coffret (1a, 1b) selon l'une quelconque des revendications précédentes, **caractérisé en ce qu'**il est conformé pour épouser la forme dudit pavillon (25).

11. Véhicule automobile, **caractérisé en ce qu'**il est équipé d'un coffret (1a, 1b) pour pavillon (25) conforme à l'une quelconque des revendications précédentes.

## Patentansprüche

1. Kasten (1a, 1b) für das Dach (25) eines Kraftfahrzeugs (27), der mindestens zwei Teile (3, 5, 29, 31) umfasst, wodurch er ein variierbares Unterbringungsvolumen bildet, **dadurch gekennzeichnet, dass** die Teile (3, 5, 29, 31) in Längsrichtung im Verhältnis zueinander gleiten können, so dass das Unterbringungsvolumen erhöht oder verringert wird.

2. Kasten (1a, 1b) gemäß Anspruch 1, **dadurch gekennzeichnet, dass** die Teile einerseits einen im Wesentlichen parallelepipedförmigen vorderen Behälter (3) umfassen, der dazu bestimmt ist, fest am Dach (25) befestigt zu werden, und andererseits einen hinteren Behälter (5), der im Wesentlichen die gleiche Form wie der vordere Behälter (3) hat, und der innerhalb von diesem verschiebbar montiert ist.

3. Kasten (1a, 1b) gemäß Anspruch 2, **dadurch gekennzeichnet, dass** er mindestens eine Aufhängungsschiene (7, 9) umfasst, die dazu bestimmt ist, am Dach (25) befestigt zu werden, wobei diese Schiene einen vorderen Teil (11, 13) umfasst, der mit dem vorderen Behälter (3) fest verbunden ist, und einen hinteren Teil (15, 17), der sich über diesen Behälter hinaus erstreckt, und dadurch, dass der hintere Behälter (5) gleitend auf diesem hinteren Teil (15, 17) der Schiene (7, 9) befestigt ist.

4. Kasten (1a, 1b) gemäß Anspruch 3, **dadurch gekennzeichnet, dass** er zwei Aufhängungsschienen (7, 9) umfasst.

5. Kasten (1a, 1b) gemäß einem beliebigen der Ansprüche 2 bis 4, **dadurch gekennzeichnet, dass** mindestens einer der Behälter (3, 5) eine Quertüre (19) aufweist, die mindestens zwei Türflügel (21, 23) von unterschiedlichen Größen umfasst.

6. Kasten (1a, 1b) gemäß Anspruch 5, **dadurch gekennzeichnet, dass** der hintere Behälter (5) eine Türe (19) aufweist, die zwei Türflügel (21, 23) umfasst, die sich im Wesentlichen über 1/3 beziehungsweise 2/3 der Breite des hinteren Behälters (5) erstrecken.

7. Kasten (1a, 1b) gemäß Anspruch 1, **dadurch gekennzeichnet, dass** die Teile einerseits einen Behälter (29) und andererseits eine Platte (31) umfassen, die auf dem unteren hinteren Teil des Behälters (29) montiert ist.

8. Kasten (1a, 1b) gemäß Anspruch 7, **dadurch gekennzeichnet, dass** die Fläche (31) eine Quertüre (33) aufweist, die sich nach unten öffnen kann und sich praktisch über die Gesamtheit der Breite des Behälters (29) erstreckt.

9. Kasten (1a, 1b) gemäß einem der Ansprüche 7 oder 8, **dadurch gekennzeichnet, dass** der Behälter (29) in seinem oberen Teil offen ist.

10. Kasten (1a, 1b) gemäß einem beliebigen der vorhergehenden Ansprüche, **dadurch gekennzeichnet, dass** er derart angepasst ist, dass er die Form des Dachs (25) annimmt.

11. Kraftfahrzeug, **dadurch gekennzeichnet, dass** es mit einem Kasten (1a, 1b) für das Dach (25) ausgestattet ist, der mit irgend einem der vorhergehenden Ansprüche übereinstimmt.

## Claims

1. A box (1a, 1b) for the roof (25) of an automobile vehicle (27) which comprises at least two portions (3, 5, 29, 31) forming a modulable storage volume, **characterised in that** the portions (3, 5, 29, 31) are adapted to slide longitudinally with respect to one another in order to increase or decrease this storage volume.

2. A box (1a, 1b) as claimed in claim 1, **characterised in that** the portions comprise a substantially parallelepipedic front chamber (3) adapted to be rigidly secured to the roof (25), and a rear chamber (5) substantially homothetic with respect to the front chamber (3) and mounted to slide into the interior thereof.

3. A box (1a, 1b) as claimed in claim 2, **characterised in that** it comprises at least one suspension rail (7, 9) adapted to be secured to the roof (25), this rail comprising a front portion (11, 13) rigid with the front chamber (3) and a rear portion (15, 17) extending above this chamber, and **in that** the rear chamber (5) is mounted to slide on the rear portion (15, 17) of the rail (7, 9).

4. A box (1a, 1b) as claimed in claim 3, **characterised in that** it comprises two suspension rails (7, 9).

5. A box (1a, 1b) as claimed in any one of claims 2 to 4, **characterised in that** at least one of the chambers (3, 5) comprises a transverse door (19) which comprises at least two leaves (21, 23) of different size.

6. A box (1a, 1b) as claimed in claim 5, **characterised in that** the rear chamber (5) comprises a door (19) comprising two leaves (21, 23) extending over substantially 1/3 and 2/3 respectively of the width of this rear chamber (5).

7. A box (1a, 1b) as claimed in claim 1, **characterised in that** the portions comprise a chamber (29) and a panel (31) mounted to slide on the lower rear portion of the chamber (29).

8. A box (1a, 1b) as claimed in claim 7, **characterised in that** the panel (31) comprises a transverse door (33) which is adapted to be opened downwards and extends over almost all of the width of the chamber (29).

9. A box (1a, 1b) as claimed in any one of claims 7 or 8, **characterised in that** the upper portion of the chamber (29) is open.

10. A box (1a, 1b) as claimed in any one of the preceding claims, **characterised in that** it is shaped to fit the shape of the roof (25).

11. An automobile vehicle, **characterised in that** it is fitted with a box (1a, 1b) for its roof (25) as claimed in any one of the preceding claims.
